# FASCICULE DE BREVET EUROPEEN

(11) **EP 1 951 993 B1**
(45) Date de publication et mention de la délivrance du brevet: **02.09.2009**
(21) Numéro de dépôt: 06831270.1
(22) Date de dépôt: 03.10.2006
(51) Int. Cl.: F01L 1/24, B23P 19/00, B25J 15/12

(54) **DISPOSITIF DE PREHENSION ET DE MISE EN PLACE D'UN OBJET ET PROCEDE CORRESPONDANT**
VERFAHREN ZUM HALTEN UND MONTIEREN EINES OBJEKTS UND ENTSPRECHENDES VERFAHREN
DEVICE FOR GRIPPING AND INSTALLING AN OBJECT AND CORRESPONDING METHOD

(30) Priorité: 05.10.2005 FR 0510199
(43) Date de publication de la demande: 06.08.2008
(73) Titulaire: Process Conception Ingenierie S.A., 92190 Meudon (FR)
(72) Inventeur: LEFEVRE, Christian, F-25460 Etupes (FR)
(74) Mandataire: Ménès, Catherine
(86) Numéro de dépôt international: PCT/FR2006/050985
(87) Numéro de publication internationale: WO 2007/042710

(56) Documents cités:
- US-A- 2 328 383
- US-A- 3 583 451
- US-A- 4 411 576
- US-B1- 6 418 818

## Description

L'invention concerne un dispositif de préhension et de mise en place d'une pièce comprenant au moins une partie cylindrique dans un espace à encombrement réduit selon le préambule de la revendication 1 et un procédé selon le préambule de la revendication 9.

Un tel dispositif et un tel procédé sont décrits dans le document US-A-3 583 451.

En particulier, l'invention concerne un dispositif de préhension et de mise en place d'une butée hydraulique dans un logement formé dans la culasse d'un moteur à combustion interne d'un véhicule automobile.

Un tel dispositif de préhension et de mise en place est destiné à être utilisé dans une chaîne de montage d'un moteur à combustion d'un véhicule automobile.

Un positionnement correcte et précis des butées hydrauliques à l'intérieur des logements de la culasse est nécessaire au bon fonctionnement du moteur. En effet, un linguet est monté en appui sphérique à une extrémité sur la butée hydraulique et en appui linéique à l'autre extrémité sur une queue de soupape. Au cours du cycle de combustion du moteur à combustion interne, un galet roule sur une came d'un arbre à cames et oscille de l'amplitude donnée par la came pour ouvrir la soupape.

Les butées hydrauliques sont généralement mises en place par un opérateur à l'aide d'une bouterolle. Toutefois, compte tenu des cadences de production, cette opération nécessite un grand nombre d'opérateurs. De plus, cette opération manuelle peut occasionner un mauvais positionnement ou une absence de mise en place d'une butée hydraulique dans la culasse d'un moteur.

Il est également connu de mettre en place les butées hydrauliques à l'aide d'un robot équipé d'un préhenseur supportant des pinces de manipulation. Chaque pince de manipulation possède deux mors parallèles de prise et de dépose d'une butée hydraulique.

Toutefois, les deux mors latéraux ont l'inconvénient d'être encombrants en raison de leurs dimensions et de l'espace nécessaire pour ouvrir les deux mors.

En conséquence, ces préhenseurs ne sont pas adaptés pour mettre en place des butées hydrauliques au fond d'un puits, contre une nervure, une paroi ou une forme enveloppante d'une fonderie. Ainsi, ces préhenseurs ne peuvent mettre en place que certaines butées hydrauliques dans certains logements de la culasse.

L'invention a pour but un dispositif de préhension et de mise en place de butées hydrauliques adapté pour mettre en place des pièces présentant une partie cylindrique dans un encombrement réduit et notamment pour mettre en place des butées hydrauliques dans des logements de culasse d'accès difficile.

A cet effet, l'invention a pour objet un dispositif de préhension et de mise en place d'une pièce comprenant au moins une tête sensiblement axisymétrique, le dispositif comportant au moins un moyen de préhension de la pièce, caractérisé en ce que le ou chaque moyen de préhension comprend un fourreau de préhension, un élément d'appui et des moyens de déplacement axial du fourreau de préhension par rapport à l'élément d'appui, le fourreau de préhension ayant une extrémité déformable élastiquement radialement présentant une section propre à serrer et retenir la tête, et l'élément d'appui étant propre à bloquer en position la pièce lors du déplacement du fourreau de préhension de manière à séparer la pièce du fourreau de préhension.

Suivant des modes particuliers de réalisation, le dispositif de préhension et de mise en place de butée hydraulique comporte l'une ou plusieurs des caractéristiques suivantes :
- le fourreau de préhension présente une section intérieure de dimension inférieure à la dimension de la tête de manière à autoriser un engagement axial en force de la tête dans le fourreau de préhension, par élargissement du fourreau de préhension ;
- le fourreau de préhension présente une section extérieure de dimension supérieure à la dimension du diamètre de la tête de manière à autoriser un engagement axial en force du fourreau de préhension dans la tête, par compression du fourreau de préhension ;
- le fourreau de préhension comporte un tube métallique pourvu à son extrémité de fentes s'étendant axialement le long du tube ;
- l'élément d'appui est logé dans une portion du fourreau de préhension, ladite portion suivant axialement l'extrémité ;
- les moyens de déplacement comprennent des vérins pneumatiques ;
- il comporte huit moyens de préhension adaptés pour prendre et pour mettre en place huit pièces simultanément ; et
- la ou chaque pièce est une butée hydraulique.

L'invention a également pour objet un procédé de préhension d'au moins une pièce comprenant une tête et de mise en place de la ou de chaque pièce dans au moins un logement, caractérisé en ce que ledit procédé est réalisé par le dispositif défini selon l'une quelconque des caractéristiques mentionnées ci-dessus, et en ce qu'il comprend les étapes suivantes :
- déplacement du ou de chaque moyen de préhension afin de positionner le ou chaque fourreau de préhension en vis-à-vis de ou de chaque pièce ;
- pression de ou de chaque fourreau de préhension sur la ou chaque pièce pour engager en force le ou chaque fourreau de préhension avec la ou chaque pièce ;
- déplacement du ou de chaque moyen de préhension afin de positionner le ou chaque fourreau de préhension en vis-à-vis du ou de chaque logement ; et
- déplacement du ou de chaque fourreau de préhension par rapport à le ou chaque élément d'appui pour libérer la ou chaque pièce dans le ou chaque logement.

Suivant un mode particulier de réalisation, le procédé comporte les étapes suivantes :
- prise, en tant que pièce, d'au moins une butée hydraulique dans un conteneur ; et
- dépose de cette ou de chaque butée hydraulique dans au moins un logement d'une culasse d'un véhicule automobile.

L'invention sera mieux comprise à la lecture de la description qui va suivre, donnée uniquement à titre d'exemple et faite en se référant aux dessins, sur lesquels :
- la figure 1 est une vue en perspective schématique d'un dispositif selon l'invention dans une position de préhension des butées hydrauliques ;
- la figure 2 est une vue en coupe partielle suivant le plan II-II de la figure 1 d'une partie du dispositif selon la figure 1 ; et
- la figure 3 est une vue en coupe partielle d'une partie du dispositif selon la figure 2 dans une position de libération de la butée hydraulique.

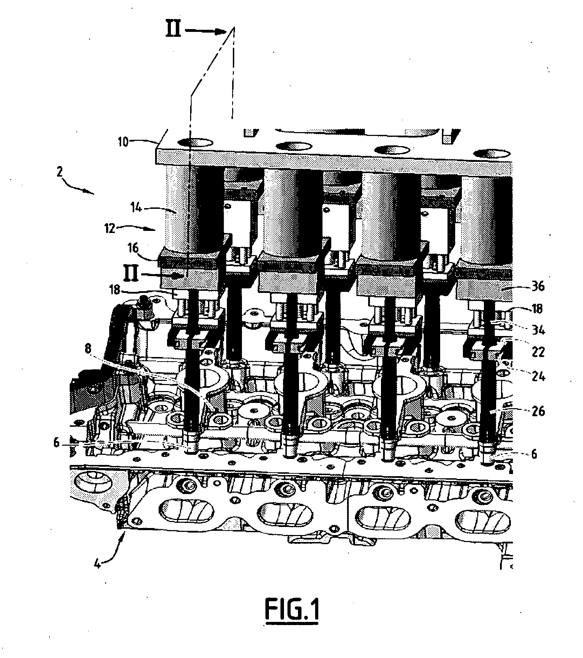

Le dispositif de préhension et de mise en place 2 selon l'invention est illustré sur la figure 1 dans une position dans laquelle il est disposé au-dessus d'une culasse 4 destinée à être montée sur un moteur à combustion interne d'un véhicule automobile.

Ce dispositif 2 porte huit butées hydrauliques 6 propres à venir chacune dans un logement 8 de la culasse 4.

Le dispositif 2 comprend un châssis non représenté en forme de portique ou de potence équipé d'un plateau de support horizontal 10, des moyens de déplacement du châssis non représentés et des moyens de déplacement verticale du plateau de support 10 également non représentés.

Le plateau 10 supporte huit moyens de préhension 12 propres à porter et à déposer chacun une butée hydraulique 6.

Chaque moyen de préhension 12 comprend une colonne 14 (système de « compliance ») fixée à une de ses extrémités à la face inférieure du plateau 10 et portant à son autre extrémité une semelle de liaison 16.

Un vérin pneumatique 18 est solidaire de la face inférieure de la semelle 16. L'extrémité mobile 20 du vérin 18 porte un étrier 22 de fixation d'un sabot 24 qui enserre le pourtour d'un fourreau de préhension 26.

Le vérin pneumatique 18 est adapté pour déplacer verticalement de haut en bas l'étrier 22, le sabot 24 et le fourreau 26 solidaires l'un de l'autre.

Le fourreau 26 est constitué d'une tubulure rectiligne en acier ressort munie d'une extrémité 31 déformable élastiquement radialement et présentant une ouverture 28 à son extrémité libre. Il est pourvu à son extrémité de plusieurs fentes longilignes 32 s'étendant le long de la tubulure et débouchant sur l'ouverture 28.

Au repos, le diamètre interne du fourreau 26 présente une dimension légèrement inférieure à la dimension radiale d'une tête cylindrique 30 de la butée hydraulique 6.

Lorsque le fourreau 26 est déformé, il est propre à enserrer la tête cylindrique 30, autrement dit à exercer une force de retenue radiale sur cette tête 30 de manière à retenir la butée hydraulique 6.

Une barre d'extraction cylindrique 34 est fixée à la face inférieure de la semelle 16 et à un socle de support 36. Cette barre d'extraction 34 est montée dans le fourreau 26 et s'étend axialement dans celui-ci. Elle présente un diamètre inférieur au diamètre interne du fourreau 26.

La longueur de la barre d'extraction 34 est prévue de telle sorte que lorsque le vérin pneumatique 18 est en début de course l'extrémité 38 de la barre d'extraction fait saillie par rapport l'extrémité 40 du fourreau, et lorsque le vérin pneumatique 18 est en fin de course, l'extrémité 40 du fourreau fait saillie par rapport l'extrémité 38 de la barre d'extraction sur une étendue correspondant à une portion 42 du fourreau. Cette portion 42 est destinée à recevoir la partie cylindrique 30 de la butée hydraulique, comme décrit ultérieurement.

Un capteur 44 de détection de la présence d'une butée hydraulique est monté sur la barre d'extraction 34.

En variante, ce dispositif 2 est modifié de façon à pouvoir positionner des pièces tubulaires creuses dans un encombrement réduit.

Le fourreau de préhension présente alors un diamètre de dimension supérieure à la dimension du diamètre d'au moins une tête cylindrique creuse de la pièce tubulaire de manière à autoriser un engagement axial en force du fourreau de préhension dans la pièce creuse par compression du fourreau de préhension.

Dans ce cas, le fourreau de préhension est adapté pour accrocher la pièce sur une de ses faces intérieures. La barre d'extraction n'est pas montée à l'intérieur du fourreau de préhension mais est disposée à l'extérieur de celui-ci. Les rebords externes de la pièce qui entourent le fourreau de préhension, viennent en butée contre la barre d'extraction lors du déplacement du fourreau pour libérer la pièce.

En variante, ce dispositif est utilisé pour prendre et poser des pièces comprenant une tête sphérique à la place d'une tête cylindrique.

En fonctionnement, le plateau de support 10 est positionné au-dessus d'un conditionnement de butées hydrauliques 6.

Puis, le plateau de support 10 est abaissé en vis-à-vis et dans l'axe des butées hydrauliques 6 à saisir jusqu'à ce que les fourreaux de préhension 24 coiffent les butées hydrauliques.

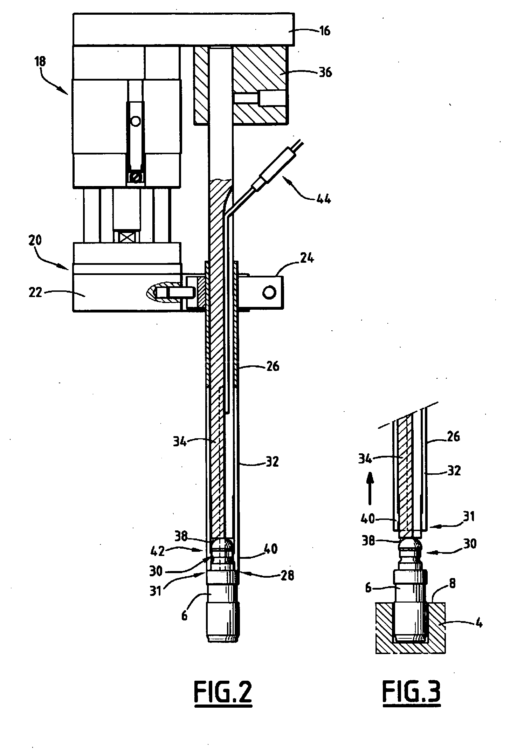

Les vérins pneumatiques 18 sont commandés pour déplacer les fourreaux de préhension 26 verticalement vers le bas et les presser contre les butées hydrauliques. La portion d'extrémité 42 des fourreaux de préhension est déformée élastiquement de sorte que la tête cylindrique 30 des butées hydrauliques est introduite à l'intérieur des fourreaux 26 par élargissement élastique du fourreau. Les têtes cylindriques 30 sont ainsi enfoncées en force à l'intérieur des fourreaux 26 qui se déforment et s'élargissent lors de cet enfoncement. Les butées hydrauliques sont alors accrochées aux fourreaux 26, comme visible sur la figure 2.

Le plateau de support 10 est soulevé. Les butées hydrauliques sont entraînées avec les fourreaux 26.

Puis, le châssis du dispositif 2 est déplacé en vis-à-vis d'une culasse 4 de sorte que l'axe des fourreaux de préhension 26 soit positionné en vis-à-vis et dans l'alignement axial de l'axe des logements 8 de la culasse 4, comme visible sur la figure 1.

Le plateau de support 10 est abaissé dans l'axe des logements 8 de manière à positionner les butées hydrauliques 6 dans les logements 8 en appui sur le fond.

Les vérins pneumatiques 18 sont actionnés pour déplacer les fourreaux de préhension 26 par rapport aux barres d'extraction 34. Plus précisément, les fourreaux 26 coulissent sur les barres d'extraction 34.

Comme les butées hydrauliques 6 sont en prises dans les fourreaux de préhension 26, elles sont entraînées lors du déplacement des fourreaux 26, jusqu'à ce que celles-ci viennent en butée contre l'extrémité d'appui 38 des barres d'extraction. Puis, les fourreaux 26 continuent à se déplacer alors que les butées hydrauliques sont maintenues fixes en position par les barres d'extraction 34.

Lorsque l'extrémité 38 des barres d'extraction est au même niveau que l'extrémité 40 des fourreaux (ou en saillie par rapport à l'extrémité 40), les butées hydrauliques sont extraites de l'emprise des fourreaux 26 et sont posés dans le logement 8 comme visible sur la figure 3. Ainsi, la libération des butées hydrauliques est réalisée par déplacement des fourreaux 24 par rapport aux barres d'extraction 34 maintenant les butées 6 fixes et en place.

Enfin, le plateau 10 est soulevé et le châssis est déplacé vers un autre conditionnement contenant des butées hydrauliques à mettre en place dans une autre culasse.

Avantageusement, ce dispositif assure une mise en place automatique des butées hydrauliques dans un encombrement légèrement supérieur à l'encombrement limité au diamètre maximum des butées hydrauliques.

## Revendications

1. Dispositif (2) de préhension et de mise en place d'une pièce (6) comprenant au moins une tête (30) sensiblement axisymétrique, le dispositif comportant au moins un moyen de préhension (12) de la pièce (6), **caractérisé en ce que** le ou chaque moyen de préhension (12) comprend un fourreau de préhension (26), un élément d'appui (34) et des moyens (18) de déplacement axial du fourreau de préhension (26) par rapport à l'élément d'appui (34), le fourreau de préhension (26) ayant une extrémité (31,42) déformable élastiquement radialement présentant une section propre à serrer et retenir la tête (30), et l'élément d'appui (34) étant propre à bloquer en position la pièce (6) lors du déplacement du fourreau de préhension (26) de manière à séparer la pièce (6) du fourreau de préhension (26).

2. Dispositif selon la revendication 1, **caractérisé en ce que** le fourreau de préhension (26) présente une section intérieure de dimension inférieure à la dimension de la tête (30) de manière à autoriser un engagement axial en force de la tête (30) dans le fourreau de préhension (26), par élargissement du fourreau de préhension (26).

3. Dispositif selon la revendication 1, **caractérisé en ce que** le fourreau de préhension (26) présente une section extérieure de dimension supérieure à la dimension du diamètre de la tête (30) de manière à autoriser un engagement axial en force du fourreau de préhension (26) dans la tête (30), par compression du fourreau de préhension (26).

4. Dispositif selon l'une quelconque des revendications précédentes, **caractérisé en ce que** le fourreau de préhension (26) comporte un tube métallique pourvu à son extrémité (31,42) de fentes (32) s'étendant axialement le long du tube.

5. Dispositif selon l'une quelconque des revendications précédentes, **caractérisé en ce que** l'élément d'appui (34) est logé dans une portion du fourreau de préhension (26), ladite portion suivant axialement l'extrémité (31,42).

6. Dispositif selon l'une quelconque des revendications précédentes, **caractérisé en ce que** les moyens de déplacement (18) comprennent des vérins pneumatiques.

7. Dispositif selon l'une quelconque des revendications précédentes, **caractérisé en ce qu'**il comporte huit moyens de préhension (12) adaptés pour prendre et pour mettre en place huit pièces (6) simultanément.

8. Dispositif selon l'une quelconque des revendications précédentes, **caractérisé en ce que** la ou chaque pièce (6) est une butée hydraulique.

9. Procédé de préhension d'au moins une pièce (6) comprenant une tête (30) et de mise en place de la ou de chaque pièce (6) dans au moins un logement (8), **caractérisé en ce que** ledit procédé est réalisé par le dispositif (2) défini selon l'une quelconque des revendication 1 à 8, et **en ce qu'**il comprend les étapes suivantes :
- déplacement du ou de chaque moyen de préhension (12) afin de positionner le ou chaque fourreau de préhension (26) en vis-à-vis de ou de chaque pièce (6) ;
- pression de ou de chaque fourreau de préhension (26) sur la ou chaque pièce (6) pour engager en force le ou chaque fourreau de préhension (26) avec la ou chaque pièce (6) ;
- déplacement du ou de chaque moyen de préhension (12) afin de positionner le ou chaque fourreau de préhension (26) en vis-à-vis du ou de chaque logement (8) ; et
- déplacement du ou de chaque fourreau de préhension (26) par rapport à le ou chaque élément d'appui (34) pour libérer la ou chaque pièce (6) dans le ou chaque logement (8).

10. Procédé selon la revendication 9, **caractérisé en ce qu'**il comporte les étapes suivantes :
- prise, en tant que pièce, d'au moins une butée hydraulique (6) dans un conteneur ; et
- dépose de cette ou de chaque butée hydraulique (6) dans au moins un logement (8) d'une culasse (4) d'un véhicule automobile.

## Claims

1. Device (2) for gripping and placing a part (6) comprising at least one essentially axisymmetric head (30), the device comprising at least one gripping means (12) for gripping the part (6), said device being **characterized in that** the or each gripping means (12) comprises a gripping sheath (26), a supporting element (34), and means (18) for the axial movement of the gripping sheath (26) relative to the supporting element (34), the gripping sheath (26) having a radially elastically deformable end (31, 42) whose cross section is suitable for grasping and retaining the head (30), and the supporting element (34) being suitable for immobilizing the part (6) during the movement of the gripping sheath (26) in such a way as to separate the part (6) from the gripping sheath (26).

2. Device according to Claim 1, **characterized in that** the gripping sheath (26) has an internal cross section whose dimension is smaller than the dimension of the head (30) in such a way that the head (30) can be forcibly engaged axially in the gripping sheath (26), by expansion of the gripping sheath (26).

3. Device according to Claim 1, **characterized in that** the gripping sheath (26) has an external cross section whose dimension is greater than the dimension of the diameter of the head (30) in such a way that the gripping sheath (26) can be forcibly engaged axially in the head (30), by compression of the gripping sheath (26) .

4. Device according to any one of the preceding claims, **characterized in that** the gripping sheath (26) comprises a metal tube at its end (31, 42) are slots (32) extending axially along the tube.

5. Device according to any one of the preceding claims, **characterized in that** the supporting element (34) is housed in a portion of the gripping sheath (26), which portion axially follows the end (31, 42).

6. Device according to any one of the preceding claims, **characterized in that** the movement means (8) comprise pneumatic cylinders.

7. Device according to any one of the preceding claims, **characterized in that** it comprises eight gripping means (12) suitable for picking and placing eight parts (6) simultaneously.

8. Device according to any one of the preceding claims, **characterized in that** the or each part (6) is a hydraulic stop.

9. Method for gripping at least one part (6) comprising a head (30) and placing the or each part (6) in at least one housing (8), **characterized in that** said method is carried by the device (2) defined in accordance with any one of Claims 1 to 8, and **in that** it includes the following steps:
• moving the or each gripping means (12) to position the or each gripping sheath (26) adjacent to the or each part (6);
• pressing the or each gripping sheath (26) onto the or each part (6) to forcibly engage the or each gripping sheath (26) with the or each part (6);
• moving the or each gripping means (12) to position the or each gripping sheath (26) adjacent to the or each housing (8); and
• moving the or each gripping sheath (26) relative to the or each supporting element (34) to release the or each part (6) into the or each housing (8).

10. Method according to Claim 9, **characterized in that** it comprises the following steps:
• picking, as a part, at least one hydraulic stop (6) from a container; and
• depositing this or each hydraulic stop (6) in at least one housing (8) in a housing (8) in a cylinder head (4) of the motor vehicle.

## Patentansprüche

1. Vorrichtung (2) zum Greifen und Anordnen eines Teils (6), das wenigstens einen im Wesentlichen achsensymmetrischen Kopf (30) aufweist, wobei die Vorrichtung wenigstens ein Mittel (12) zum Greifen des Teils (6) enthält, **dadurch gekennzeichnet, dass** das oder jedes Greifmittel (12) eine Greifhülse (26), ein Abstützelement (34) und Mittel (18) zum axialen Verlagern der Greifhülse (26) in Bezug auf das Abstützelement (34) enthält, wobei die Greifhülse (26) ein radial elastisch verformbares Ende (31, 42) besitzt, das einen geeigneten Querschnitt aufweist, um den Kopf (30) festzuklemmen und zu halten, und wobei das Abstützelement (34) geeignet ist, das Teil (6) bei der Verlagerung der Greifhülse (26) an seiner Position zu blockieren, derart, dass das Teil (6) von der Greifhülse (26) getrennt wird.

2. Vorrichtung nach Anspruch 1, **dadurch gekennzeichnet, dass** die Greifhülse (26) einen Innenquerschnitt mit einer Abmessung aufweist, die kleiner als die Abmessung des Kopfes (30) ist, derart, dass ein axialer Eingriff mit Kraft des Kopfes (30) in der Greifhülse (26) durch Aufweiten der Greifhülse (26) zugelassen wird.

3. Vorrichtung nach Anspruch 1, **dadurch gekennzeichnet, dass** die Greifhülse (26) einen Außenquerschnitt mit einer Abmessung aufweist, die größer als die Abmessung des Durchmessers des Kopfes (30) ist, derart, dass ein axialer Eingriff mit Kraft der Greifhülse (26) in den Kopf (30) durch Kompression der Greifhülse (26) zugelassen wird.

4. Vorrichtung nach einem der vorhergehenden Ansprüche, **dadurch gekennzeichnet, dass** die Greifhülse (26) ein Metallrohr aufweist, das an seinem Ende (31, 42) mit Schlitzen (32) versehen ist, die sich axial entlang des Rohrs erstrecken.

5. Vorrichtung nach einem der vorhergehenden Ansprüche, **dadurch gekennzeichnet, dass** sich das Abstützelement (34) in einem Abschnitt der Greifhülse (26) befindet, wobei der Abschnitt axial dem Ende (31, 42) folgt.

6. Vorrichtung nach einem der vorhergehenden Ansprüche, **dadurch gekennzeichnet, dass** die Verlagerungsmittel (18) Druckluftzylinder enthalten.

7. Vorrichtung nach einem der vorhergehenden Ansprüche, **dadurch gekennzeichnet, dass** sie acht Greifmittel (12) enthält, die dazu ausgelegt sind, gleichzeitig acht Teile (6) aufzunehmen und anzuordnen.

8. Vorrichtung nach einem der vorhergehenden Ansprüche, **dadurch gekennzeichnet, dass** jedes Teil (6) ein Hydraulik-Widerlager ist.

9. Verfahren zum Greifen wenigstens eines Teils (6), das einen Kopf (30) aufweist, und zum Anordnen des oder jedes Teils (6) in wenigstens einem Aufnahmesitz (8), **dadurch gekennzeichnet, dass** das Verfahren durch die Vorrichtung (2) nach einem der Ansprüche 1 bis 8 ausgeführt wird und dass es die folgenden Schritte enthält:
- Verlagern des oder jedes Greifmittels (12), um die oder jede Greifhülse (26) gegenüber dem oder jedem Teil (6) zu positionieren;
- Pressen der oder jeder Greifhülse (26) auf das oder jedes Teil (6), um die oder jede Greifhülse (26) mit dem oder jedem Teil (6) mit Kraft in Eingriff zu bringen;
- Verlagern der oder jeder Greifhülse (12), um die oder jede Greifhülse (26) gegenüber dem oder jedem Aufnahmesitz (8) zu positionieren; und
- Verlagern der oder jeder Greifhülse (26) in Bezug auf das oder jedes Abstützelement (34), um das oder jedes Teil (6) in dem oder jedem Aufnahmesitz (8) freizugeben.

10. Verfahren nach Anspruch 9, **dadurch gekennzeichnet, dass** es die folgenden Schritte enthält:
- Entnehmen wenigstens eines in einem Behälter befindlichen Hydraulik-Widerlagers (6) als Teil; und
- Ablegen dieses oder jedes Hydraulik-Widerlagers (6) in wenigstens einem Aufnahmesitz (8) eines Zylinderkopfs (6) eines Kraftfahrzeugs.
